(19) Europäisches Patentamt
European Patent Office
Office européen des brevets

(11) EP 4 518 099 A1

(12) EUROPEAN PATENT APPLICATION
published in accordance with Art. 153(4) EPC

(43) Date of publication:
05.03.2025 Bulletin 2025/10

(51) International Patent Classification (IPC):
H02J 50/12 (2016.01)     B60C 23/04 (2006.01)

(21) Application number: 23912415.9

(52) Cooperative Patent Classification (CPC):
B60C 23/04; H02J 50/12

(22) Date of filing: 02.06.2023

(86) International application number:
PCT/KR2023/007609

(87) International publication number:
WO 2024/143728 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.12.2022 KR 20220184544

(71) Applicant: Banf Co., Ltd.
Seoul 06247 (KR)

(72) Inventor: KIM, Young Sun
Gunpo-si, Gyeonggi-do 15863 (KR)

(74) Representative: Isarpatent
Patent- und Rechtsanwälte
Barth Hassa Peckmann & Partner mbB
Friedrichstraße 31
80801 München (DE)

(54) WIRELESS POWER TRANSMISSION OR RECEPTION SYSTEM AND WIRELESS POWER TRANSMISSION OR RECEPTION METHOD

(57) The present invention relates to a wireless power transmission or reception system for measuring a valid charging time in which a voltage value measured by a reception unit is equal to or greater than a pre-configured voltage value, and controlling transmission power so that the valid charging time is included in a pre-configured target charging time range.

Fig. 1a

EP 4 518 099 A1

Fig. 1b

**Description**

[Technical Field]

The present invention relates to a wireless power transmission and reception system and method, and more particularly to a wireless power transmission and reception system and method using a magnetic resonance method capable of efficiently and stably supplying wireless power in an environment in which intermittent charging, change in transmission distance, etc. may occur.

[Background Art]

In general, when air pressure of a tire of a vehicle is excessively high or low, the tire may burst or the vehicle may easily skid, which may lead to a major accident. In addition, when proper air pressure cannot be maintained, fuel consumption increases, fuel efficiency deteriorates, a tire lifespan is shortened, and ride comfort and braking power are greatly reduced. A safety device installed in the vehicle to prevent such a tire defect is a tire pressure monitoring system (TPMS).

In the TPMS, an air pressure detection sensor (configured using RFID) is attached to the tire to sense air pressure and temperature of the tire, and the air pressure and temperature are transmitted to a vehicle controller, allowing a driver to check the air pressure and temperature.

That is, the system is designed to detect the pressure or temperature of the tire using the air pressure detection sensor (RFID sensor) attached to the tire, and then wirelessly transmit this information to the vehicle controller so that the driver may check a pressure status of the tire. When the air pressure of the tire, etc. is managed using this system, there is an effect of improving durability of the tire, ride comfort, braking power, and fuel efficiency.

However, since the tire continues to rotate while the vehicle is being driven, it is difficult to charge the battery by wire, and thus a lifespan of the TPMS is determined by the lifespan of the battery.

A method of changing a sensing signal transmission cycle, a method of using electromotive force for charging, etc. have been introduced as a method of increasing the lifespan of the battery of the TPMS of the existing vehicle. However, there is a problem that an equipment configuration is complex and large, and it is not easy to control power according to wheel rotation speed.

[Disclosure]

[Technical Problem]

A task to be solved by the present invention is to provide a magnetic resonance wireless power transmission and reception system and a wireless power transmission and reception method capable of transmitting optimal power stably and significantly effectively by controlling a time or a length of a charging section to improve efficiency and solve charging instability caused by external environment and device operation in an intermittent wireless charging system installed on a vehicle wheel, etc.

In addition, a task to be solved by the present invention is to provide a magnetic resonance wireless power transmission and reception system capable of stably supplying sufficient power to a receiver regardless of vehicle speed using simple and effective power transmission control.

[Technical Solution]

To solve the above-mentioned tasks, the present invention provides a magnetic resonance wireless power transmission and reception system including a transmitter Tx installed on one side of a device and a receiver Rx installed on the other side and intermittently charged by an operation of the device, wherein a valid charging time during which a voltage value measured by the receiver is greater than or equal to a preset voltage value is measured, and transmission power is controlled so that the valid charging time is within a preset target charging time range.

In addition, to solve the above-mentioned tasks, the present invention provides a magnetic resonance wireless power transmission and reception system including a transmitter Tx installed on one side of a device and a receiver Rx installed on the other side and intermittently charged by an operation of the device, wherein a valid charging time during which a voltage value measured by the receiver is greater than or equal to a preset voltage value is measured, and transmission power is controlled so that a charging section length calculated based on the measured valid charging time is within a preset target charging section length range.

In addition, the transmitter may be installed on an upper body side of a vehicle wheel, and the receiver may be installed inside a tire of the vehicle wheel.

In addition, the transmitter may include an AC/DC conversion circuit, a DC/RF conversion circuit, a matching circuit, a control circuit, and a communication circuit, and the receiver may include a matching circuit, a rectifier circuit, a stabilization circuit, a DC/DC conversion circuit, a battery circuit, a control circuit, a communication circuit, and a valid charging time measurement unit.

Here, the transmission power may be controlled by changing a system frequency within an increased range or a decreased range centered on a resonance frequency for transmission of maximum power.

In addition, the transmission power may be controlled using a DC input voltage of the transmitter, or controlled by changing a duty ratio of a PWM (Pulse Width Modulation) signal of a resonance frequency.

In addition, the valid charging time measurement unit may measure a time when a voltage value is greater than or equal to at least one of an output voltage value Vr of the stabilization circuit, an output voltage value Vo of the DC/DC conversion circuit, or an output voltage value Vb of the battery circuit.

Further, to solve the above-mentioned tasks, the present invention provides a magnetic resonance wireless power transmission and reception method using a magnetic resonance wireless power transmission and reception system including a transmitter Tx installed on one side of a device and a receiver Rx installed on the other side and intermittently charged by an operation of the device, the method including a step (a) of measuring, by the receiver, a voltage value of the receiver for wireless power transmitted by the transmitter, a step (b) of measuring, by the receiver, a valid charging time, which is a time when the measured voltage value of the receiver is greater than or equal to a valid charging voltage value, and a step (c) of controlling, by the transmitter, transmission power so that the measured charging time received from the receiver is within a preset target charging time range.

Further, to solve the above-mentioned tasks, the present invention provides a magnetic resonance wireless power transmission and reception method using a magnetic resonance wireless power transmission and reception system including a transmitter Tx installed on one side of a device and a receiver Rx installed on the other side and intermittently charged by an operation of the device, the method including a step (a) of measuring, by the receiver, a voltage value of the receiver for wireless power transmitted by the transmitter, a step (b) of calculating a charging section length corresponding to a rotation length of the tire during a charging section according to the measured voltage value of the receiver, and a step (c) of controlling, by the transmitter, transmission power so that the measured charging section length received from the receiver is within a preset target charging section length range.

Here, the voltage value of the receiver may be at least one of an output voltage value Vo of the receiver, a stabilization voltage value Vr of the receiver, or a voltage value Vb of a battery being charged.

In addition, the step (b) may include a step (b1) of measuring, by the receiver, a valid charging time, which is a time when the measured voltage value of the receiver is greater than or equal to a valid charging voltage value, and a step (b2) of calculating, by the receiver, a charging section length using the measured valid charging time and a vehicle speed during the valid charging time.

Furthermore, the step (c) may include controlling the transmission power by changing a system frequency within an increased range or a decreased range centered on a resonance frequency for transmission of maximum power.

In addition, the step (c) may include controlling the transmission power using a DC input voltage of the transmitter or by changing a duty ratio of a PWM signal of a resonance frequency.

[Advantageous effects]

According to a magnetic resonance wireless power transmission and reception system and a wireless power transmission and reception method using charging section control according to the present invention, there is provided a magnetic resonance wireless power transmission and reception system capable of transmitting optimal power stably and significantly effectively by controlling a time or a length of a charging section to improve efficiency and solve charging instability caused by an external environment and device operation in an intermittent wireless charging system installed on a vehicle wheel, etc.

In addition, according to a magnetic resonance wireless power transmission and reception system and a wireless power transmission and reception method using charging section control according to the present invention, there is provided a magnetic resonance wireless power transmission and reception system capable of stably supplying sufficient power to a receiver regardless of vehicle speed using simple and effective power transmission control.

In addition, according to a magnetic resonance wireless power transmission and reception system and a wireless power transmission and reception method using charging section control according to the present invention, there is provided a magnetic resonance wireless power transmission and reception system capable of stably and efficiently transmitting power applicable to various devices or systems in an environment in which intermittent charging, change in transmission distance, etc. occur.

[Description of Drawings]

FIG. 1 illustrates an installation configuration of a magnetic resonance wireless power transmission and reception system using charging section control according to an embodiment of the present invention and a variation of a measured voltage of a receiver.

FIG. 2 illustrates a detailed block configuration of the magnetic resonance wireless power transmission and reception system using charging section control according to an embodiment of the present invention.

FIG. 3 is a diagram illustrating a flow of a magnetic resonance wireless power transmission and reception method using charging time control of a charging section according to an embodiment of the present invention.

FIG. 4 is a diagram illustrating a flow of a magnetic resonance wireless power transmission and reception method using charging section length control according to an embodiment of the present invention.

FIG. 5 is a diagram illustrating a change in an output voltage of the receiver of the wireless power transmission and reception system while a vehicle is driven.

FIG. 6 illustrates a receiver voltage graph showing transmission power control when reception power is insufficient in a magnetic resonance wireless power transmission and reception method using charging section control according to an embodiment of the present invention.

FIG. 7 illustrates a receiver voltage graph showing transmission power control when reception power is excessive in the magnetic resonance wireless power transmission and reception method using charging section control according to an embodiment of the present invention.

FIG. 8 is a graph illustrating a transmission power control algorithm of the magnetic resonance wireless power transmission and reception method using charging section control according to an embodiment of the present invention.

FIG. 9 illustrates a resonance frequency PWM signal that describes a duty ratio as a means of controlling transmission power of the magnetic resonance wireless power transmission and reception method using charging section control according to an embodiment of the present invention.

[Best Mode]

Hereinafter, preferred embodiments of the present invention will be described in detail with reference to the attached drawings. However, the present invention is not limited to the embodiments described herein and may be embodied in other forms. Rather, the embodiments introduced herein are provided so that the disclosed content may be thorough and complete, and so that the spirit of the invention may be sufficiently conveyed to those skilled in the art. Like reference numerals represent like elements throughout the specification.

Hereinafter, preferred embodiments of the present invention will be described in detail with reference to the drawings.

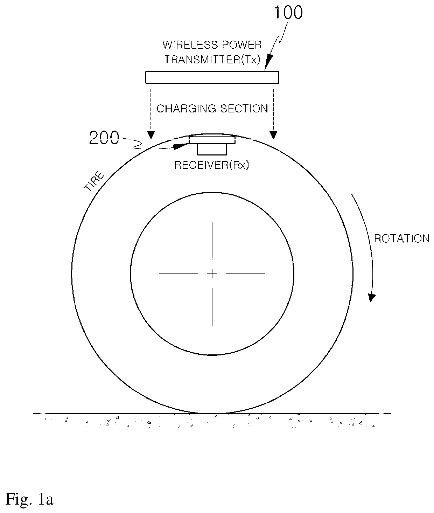

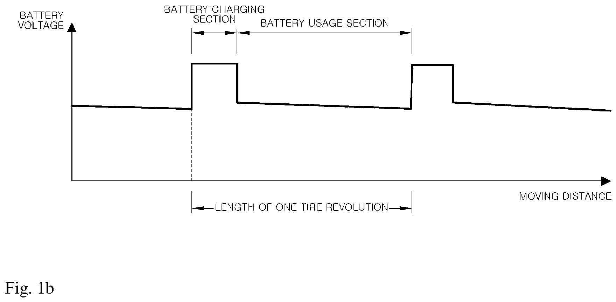

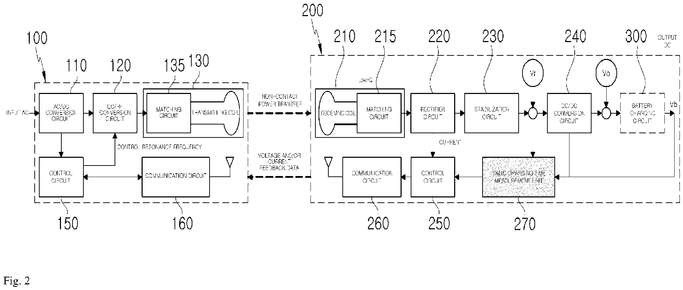

FIG. 1 illustrates an installation configuration of a magnetic resonance wireless power transmission and reception system using charging section control according to an embodiment of the present invention and a variation of a measured voltage of a receiver 200, and FIG. 2 illustrates a detailed block configuration of the magnetic resonance wireless power transmission and reception system using charging section control according to an embodiment of the present invention.

As illustrated in FIG. 1, the magnetic resonance wireless power transmission and reception system using charging section control according to the embodiment of the present invention is a magnetic resonance wireless power transmission and reception system including a transmitter Tx 100 installed on one side of a device and the receiver Rx 200 installed on the other side and intermittently charged by operation of the device, which is characterized by measuring a valid charging time in which a voltage value measured by the receiver 200 corresponds to a preset voltage value or more, and controlling transmission power so that the valid charging time is within a preset target charging time range.

In addition, a magnetic resonance wireless power transmission and reception system using charging section control according to another embodiment of the present invention is a magnetic resonance wireless power transmission and reception system including the transmitter Tx 100 installed on one side of a device and the receiver Rx 200 installed on the other side and intermittently charged by operation of the device, which is characterized by measuring a valid charging time in which a voltage value measured by the receiver 200 is greater than or equal to a preset voltage value, and controlling transmission power so that a charging section length calculated based on the measured valid charging time is within a preset target charging section length range.

That is, the magnetic resonance wireless power transmission and reception system according to the embodiment of the present invention is a wireless power transmission and reception system that may be charged by the transmitter 100 and the receiver 200 intermittently brought close to each other during operation of at least one side of a device including the transmitter 100 and the receiver 200 separated from each other and installed on one side and the other side of the device, and the wireless power transmission and reception system is provided to measure or calculate a valid charging time or a charging section length to control transmission power of the transmitter 100 so that a range of the charging time or the charging section length is within a range of a target charging section preset as an optimal charging section.

In this way, the present invention provides a magnetic resonance wireless power transmission and reception system capable of transmitting optimal power stably and significantly effectively by controlling a time or a length of a charging section in order to improve efficiency and solve charging instability occurring due to an external environment and operation of a device in an intermittent wireless charging system installed on a vehicle wheel, etc.

As illustrated in FIG. 1, when the vehicle is applied as an example of a device in which the system of the present invention is installed, the magnetic resonance wireless power transmission and reception system using charging section control may include the transmitter 100 installed on an upper body side of the vehicle wheel and the receiver 200 installed inside a tire of a wheel of the vehicle.

The magnetic resonance wireless power transmission and reception system according to the embodiment of the present invention may be used in all devices or products that are intermittently charged while at least one of the transmitter 100 or the receiver 200 is in operation and causes a change in a charging distance according to device change or an external environment, in addition to the above-described vehicle. Hereinafter, a detailed description will be given focusing on the wireless power transmission and reception system installed on the vehicle wheel.

As illustrated in FIG. 1A, when the vehicle moves, the tire rotates and receives wireless power transmitted from the transmitter 100 while the wireless power receiver 200 installed inside the tire passes through a "charging section". As illustrated in FIG. 1B, after passing through the "charging section", a usage section in which power stored in the battery is used may be distinguished.

That is, as the tire continuously rotates, the charging voltage charging section and the battery usage section occur intermittently and repeatedly, as shown in a graph of FIG. 1B.

Here, the "charging section" does not mean a coil length of the physical transmitter 100, and includes both time and length concepts as a section in which an output voltage is maintained constant in the receiver 200. The length of the charging section increases or decreases in proportion to a physical length of a coil of the transmitter 100, and increases as the amount of power transmitted from the transmitter 100 increases. However, a maximum section may be limited by the physical size of the coil.

In addition, as a detailed configuration of the wireless power transmission and reception system according to the embodiment of the present invention, as illustrated in FIG. 2, the magnetic resonance wireless power transmission and reception system using charging section control according to the embodiment of the present invention may include the transmitter 100 including an AC/DC conversion circuit 110, a DC/RF conversion circuit 120, a matching circuit 130, a control circuit 150, and a communication circuit 160, and the receiver 200 including a matching circuit 210, a rectifier circuit 220, a stabilization circuit 230, a DC/DC conversion circuit 240, a battery charging circuit 300, a control circuit 260, a communication circuit 250, and a valid charging time measurement unit 270.

Here, the DC/RF conversion circuit 120 converts DC input current into RF, and the control circuit 150 may control a resonance frequency when the DC/RF conversion circuit 120 converts DC into RF power.

In addition, the matching circuit 130 is a circuit for magnetic resonant coupling, and the communication circuit 160 may be a circuit for transmitting and receiving a voltage or current signal for a transmitting coil connected to the matching circuit 130.

The matching circuit 220 of the receiver 200 may include a receiving coil for causing coupling within a certain transmission distance with respect to the aforementioned transmitting coil and a resonance circuit causing a magnetic resonant effect.

In addition, the rectifier circuit 220 may be a circuit for rectifying a highfrequency reception power signal at a rear end of the resonance circuit, and the stabilization circuit 240 may be a circuit for stabilizing a rectified output voltage at a rear end of the rectifier circuit 220.

In addition, the DC/DC conversion circuit 240 may be a circuit for outputting a pre-intended voltage from a voltage stabilized at a rear end of the stabilization circuit 240, and the battery charging circuit 300 may be a circuit for charging a battery with power output from the DC/DC conversion circuit 240 at a battery end.

In addition, the valid charging time measurement unit 270 may be a configuration that measures a valid charging time in which at least one of a stabilization voltage $V_r$ measured at an output terminal of the stabilization circuit 230, an output voltage $V_o$ measured at an output terminal of the DC/DC conversion circuit 240, or a battery voltage $V_r$ measured at an output terminal of the battery charging circuit is equal to or greater than a preset voltage value.

In addition, the control circuit 260 may be a circuit for receiving a current signal from the rectifier circuit 220 described above, a voltage and/or current signal from the output terminal of the DC/DC conversion circuit 240, and a valid charging time signal received from the valid charging time measurement unit 270 described above, and generating a feedback control signal, and the communication circuit 250 may be a circuit for transmitting a feedback control signal generated by the control circuit 250 to the communication circuit 160 of the transmitter 100.

A control algorithm for optimal power transmission through the configuration of the wireless power transmission and reception system according to the embodiment of the present invention will be examined. When the tire is rotating, voltage variation of the receiver 200 repeats the charging section and the battery usage section. Therefore, a battery voltage of the receiver 200 exhibits a repetitive waveform as illustrated in FIG. 2B. When the battery voltage is in the charging section, wireless power is received, and thus the battery voltage is maintained as a charging voltage. When the battery voltage is outside the charging section, wireless power that has been received disappears, and thus only a remaining battery voltage exists.

In addition, a feedback voltage value for control may be a voltage value measurable by the receiver 200. A voltage signal that exhibits a clear voltage difference between the charging section and a battery consumption section may be used as a feedback signal for control including the time and length of the valid charging section.

That is, at least one of a output voltage Vr of a voltage stabilization circuit, a output voltage Vo of the DC/DC conversion circuit, or a battery charging voltage Vb may be used as a feedback signal voltage.

For example, assuming that a 3.7 V lithium-ion battery is used in the receiver 200, a battery charging voltage may be 4.2 V, a DC/DC output voltage may be 5 V, and a stabilization circuit voltage may be around 7 V. Alternatively, a battery charging voltage of 4.2 V may be directly generated from output of the DC/DC conversion circuit and used to charge the battery.

In this way, the wireless power transmission and reception system according to the embodiment of the present invention may control transmission power by measuring a voltage value of the receiver 200, and measuring a charging time of the valid charging section based thereon or calculating the length of the charging section, thereby transmitting a resultant value as a feedback signal to the transmitter 100.

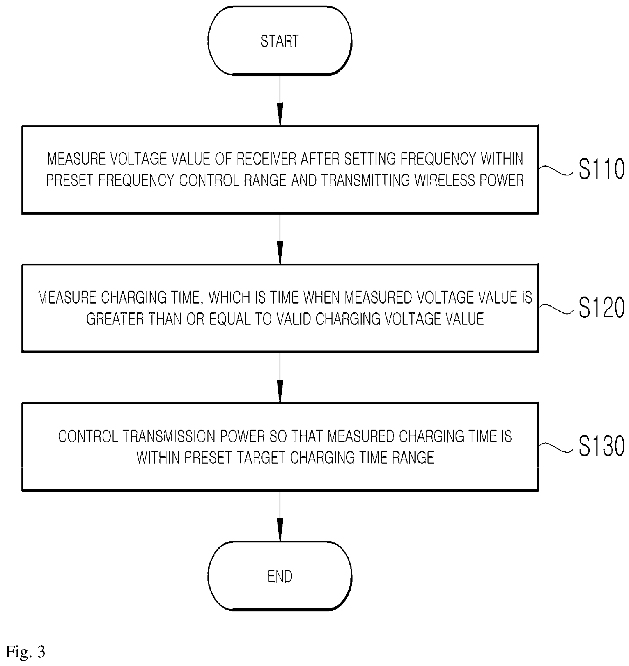

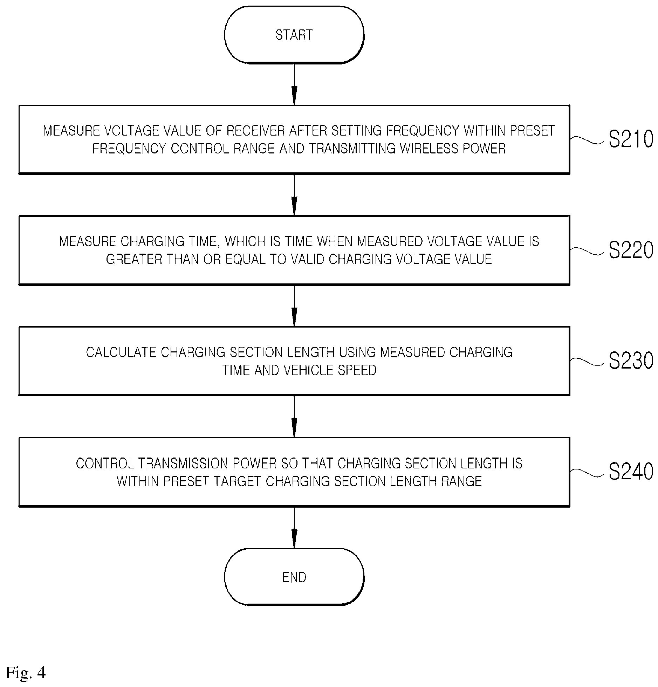

FIG. 3 is a diagram illustrating a flow of a magnetic resonance wireless power transmission and reception method using charging time control of a charging section according to an embodiment of the present invention, and FIG. 4 is a diagram illustrating a flow of a magnetic resonance wireless power transmission and reception method using charging section length control according to an embodiment of the present invention.

As illustrated in FIG. 3, in the wireless power transmission and reception method using the magnetic resonance wireless power transmission and reception system described above, the magnetic resonance wireless power transmission and reception method using charging time control of the charging section according to the embodiment of the present invention may include a step (a) of measuring, by the receiver 200, a voltage value of the receiver 200 for wireless power transmitted by the transmitter 100 (S110), a step (b) of measuring, by the receiver 200, a valid charging time, which is a time when the measured voltage value of the receiver 200 is greater than or equal to a valid charging voltage value (S120), and a step (c) of controlling, by the transmitter 100, transmission power so that the measured charging time received from the receiver 200 is within a preset target charging time range.

In addition, as illustrated in FIG. 4, in the wireless power transmission and reception method using the magnetic resonance wireless power transmission and reception system described above, the magnetic resonance wireless power transmission and reception method using charging section length control according to the embodiment of the present invention may include a step (a) of measuring, by the receiver 200, a voltage value of the receiver 200 for wireless power transmitted by the transmitter 100 (S210), a step (b) of calculating a charging section length corresponding to a rotation length of the tire during the charging section according to the measured voltage value of the receiver 200, and a step (c) of controlling, by the transmitter 100, transmission power so that the measured charging section length received from the receiver 200 is within a preset target charging section length range.

Here, the step (b) illustrated in FIG. 4 may include a step of measuring, by the receiver 200, a valid charging time, which is a time when the measured voltage value of the receiver 200 is greater than or equal to a valid charging voltage value (S220), and a step of calculating, by the receiver 200, a charging section length using the measured valid charging time and a vehicle speed during the valid charging time (S230).

In addition, the voltage value of the receiver 200 may be at least one of an output voltage value Vo of the receiver 200, a stabilization voltage value Vr of the receiver 200, or a voltage value Vb of the battery being charged.

Further, in control of transmission power, it is possible to use a method of changing and controlling a system frequency within a preset increased range or decreased range centered on a resonance frequency for transmission of maximum power, control may be performed using a DC input voltage of the transmitter 100, and control may be performed by changing a duty ratio of a PWM signal of the resonance frequency.

Hereinafter, a detailed description will be given of a magnetic resonance wireless power transmission method using charging section control according to an embodiment of the present invention with reference to the drawings, focusing on a change in a voltage of the receiver 200.

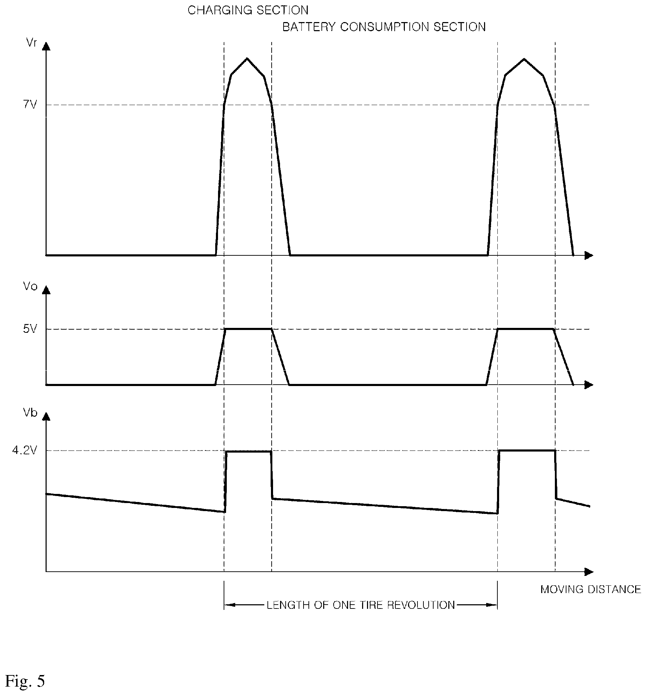

FIG. 5 is a diagram illustrating a change in an output voltage of the receiver 200 of the wireless power transmission and reception system while the vehicle is driven.

As illustrated in FIG. 5, a signal voltage of the receiver 200 to be used for feedback in the wireless power transmission method according to the embodiment of the present invention has a voltage value measured in the receiver 200 entering the charging section.

However, in the embodiment of the present invention, the voltage value of the receiver 200 used as a feedback signal is not simply a voltage value, and a length of one tire revolution and a relative charging section thereof need to be measured using these signals.

Accordingly, in the embodiment of the present invention, as described in FIG. 1, at least one of the stabilization voltage value Vr, which is a measured voltage at the output terminal of the stabilization circuit 230, the output voltage value Vo, which is a measured voltage at the output terminal of the DC/DC conversion circuit 240, or the battery voltage value Vb, which is a measured voltage at the output terminal of the battery charging circuit 300, may be used as the voltage value of the receiver 200, which may be used as a feedback signal voltage.

Here, the length of one tire revolution may be calculated using an outer diameter of the tire and may be considered a constant value unless the tire is changed.

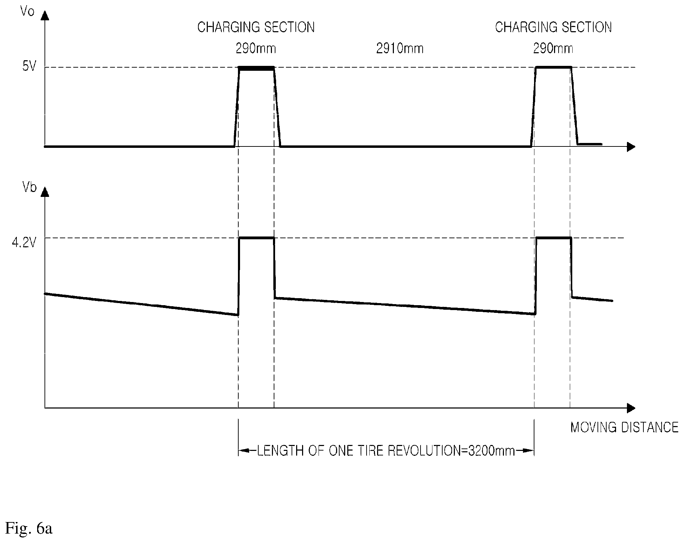

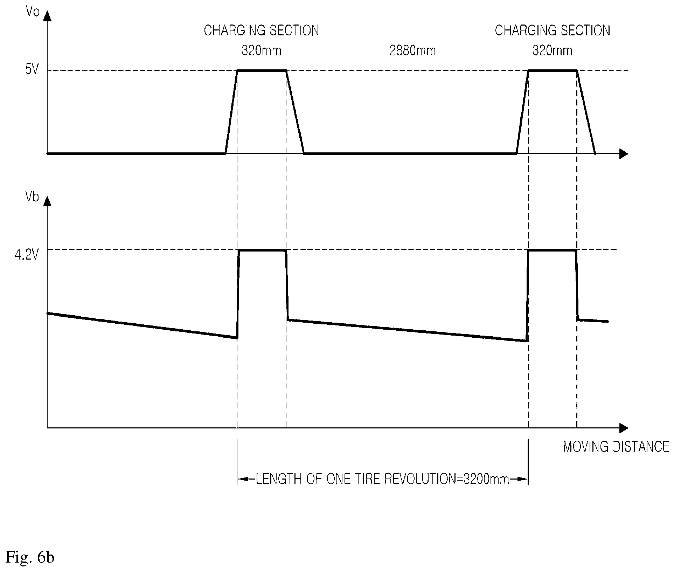

FIG. 6 illustrates a receiver 200 voltage graph showing transmission power control when reception power is insufficient in the magnetic resonance wireless power transmission and reception method using charging section control according to an embodiment of the present invention.

The example illustrated in FIG. 6 is a case where the target charging section length is set to 320 mm, which is 1/10 of the length of one tire revolution, when the length of one tire revolution is 3200 mm (that is, the outer diameter of the tire is assumed to be constant at approximately 1020 mm). Such a setting may be set in advance in consideration of a size and a type of the tire, system specifications, etc.

FIG. 6A is a graph illustrating a change in voltage of the receiver 200 when a charging section is formed so that reception power of the receiver 200 is less than a target value, and FIG. 6B is a graph illustrating a change in voltage of the receiver 200 when the charging section of the receiver 200 reaches this target value through transmission power increase control in the transmitter 100 using a feedback signal of the receiver 200.

As illustrated in FIG. 6A, it can be seen that a length of the charging section is measured or calculated as 290 mm through measurement of a voltage of the receiver 200, which is less than 320 mm corresponding to a target length value of the charging section, and thus control may be performed to increase transmission power.

As illustrated in FIG. 6B, it can be seen that the feedback signal of the receiver 200 is less than the target charging section length, and the transmitter 100 performs transmission power increase control so that the length of the charging section is changed to 320 mm and maintained at this value.

Here, even though the length or the time of the target charging section may be set to one value, the length or the time is preferably to set to a certain range for stability of the system.

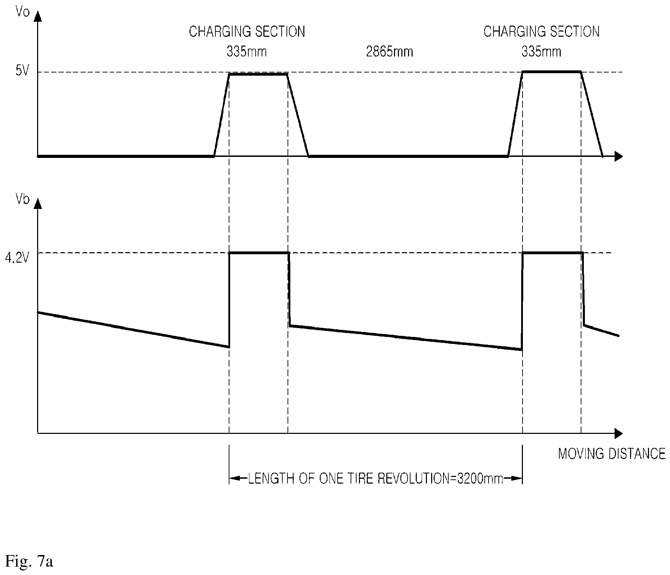

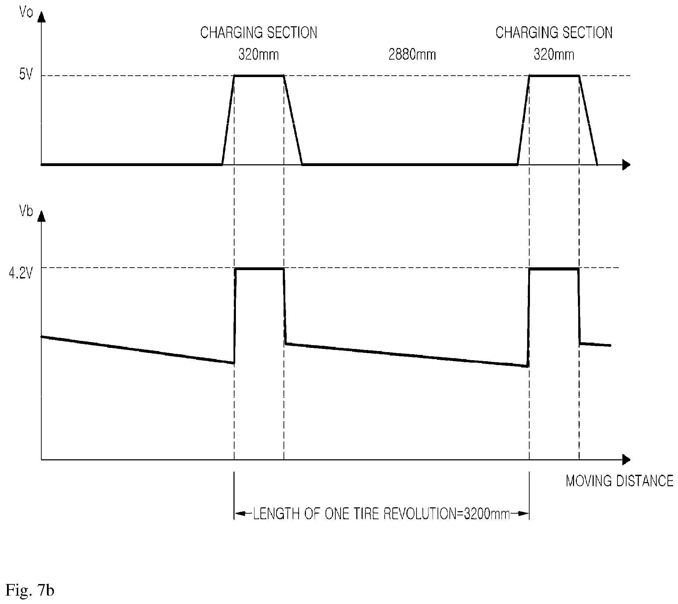

FIG. 7 illustrates a receiver 200 voltage graph showing transmission power control when reception power is excessive in the magnetic resonance wireless power transmission and reception method using charging section control according to an embodiment of the present invention.

Similarly to the example illustrated in FIG., 6 the example illustrated in FIG. 7 is a case where the target charging section length is set to 320 mm, which is 1/10 of the length of one tire revolution, when the length of one tire revolution is 3200 mm (that is, the outer diameter of the tire is assumed to be constant at approximately 1020 mm).

FIG. 7A is a graph illustrating a change in voltage of the receiver 200 when a charging section is formed so that reception power of the receiver 200 is greater than a target value, and FIG. 7B is a graph illustrating a change in voltage of the receiver 200 when the charging section of the receiver 200 reaches this target value through transmission power decrease control in the transmitter 100 using a feedback signal of the receiver 200.

As illustrated in FIG. 7A, it can be seen that a length of the charging section is measured or calculated as 335 mm through measurement of a voltage of the receiver 200, which is greater than 320 mm corresponding to a target length value of the charging section, and thus control may be performed to decrease transmission power.

As illustrated in FIG. 7B, it can be seen that the feedback signal of the receiver 200 is greater than the target charging section length, and the transmitter 100 performs transmission power decrease control so that the length of the charging section is changed to 320 mm and maintained at this value.

Here, the length of one tire revolution of the vehicle may be calculated using the outer diameter of the tire as in [Mathematical Formula 1] below, and may be a constant value. The length of one tire revolution may be calculated in advance using installed tire information of the vehicle.

[Mathematical Formula 1]

$$\text{Length of one tire revolution} = \pi \times \text{Outer diameter of tire}$$

When a time interval at which a "rising edge signal" is generated in a feedback voltage signal is measured at every moment when the receiver 200 enters the charging section, a "time of one tire revolution" is obtained, and when the "length of one tire revolution" is divided by this time, a vehicle speed may be calculated as in [Mathematical Formula 2] below. Here, the "rising edge signal" refers to a signal at a point in time when a voltage signal of the receiver 200 changes from a low state to a high state.

[Mathematical Formula 2]

$$\text{Vehicle speed} = \frac{Length\ of\ one\ tire\ revolution}{Time\ of\ one\ tire\ revolution}$$

After measuring a time during which a feedback signal voltage measured by the receiver is excited and maintained at a reference value or more as the receiver 200 enters the charging section, the charging section length may be calculated using [Mathematical Formula 3] below that multiplies this time value by the "vehicle speed" calculated in [Mathematical Formula 2]

[Mathematical Formula 3]

$$\text{Charging section length} = \text{Charging time} \times \text{Vehicle speed}$$

The charging section length at each moment is ultimately calculated by [Mathematical Formula 3], and transmission power of the transmitter 100 may be controlled so that this value is maintained at a preset target charging section length or in a range thereof, or is within the range.

In addition, the magnetic resonance wireless power transmission and reception method using charging section control according to the embodiment of the present invention may use not only the "charging section length" but also the "charging time" as the feedback control signal.

In this case, a ratio of the charging section to the length of one tire revolution may be calculated and multiplied by the "time of one tire revolution" to calculate a charging time target value. For example, when the length of one tire revolution is 3200 mm and a charging section target value is 320 mm, the ratio is 10%, that is, 0.1, and a charging time control target value at the corresponding vehicle speed may be calculated by multiplying 0.1 by a time of one tire revolution measured according to change in vehicle speed.

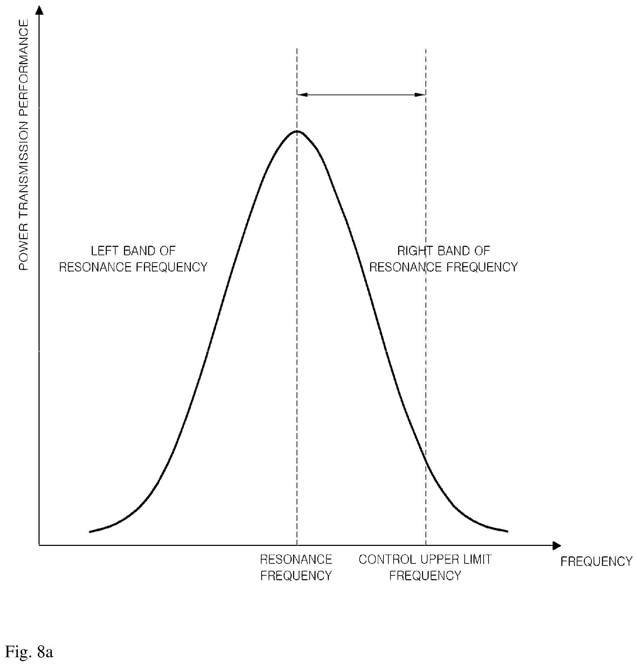

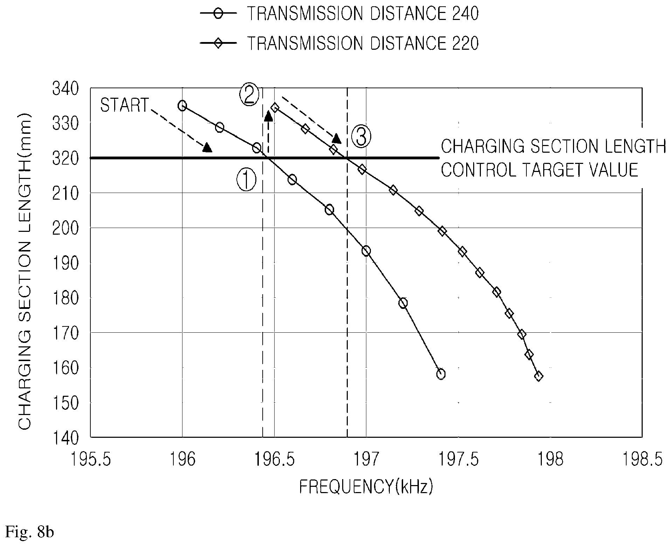

FIG. 8 is a graph illustrating a transmission power control algorithm of the magnetic resonance wireless power transmission and reception method using charging section control according to an embodiment of the present invention. FIG. 8A is a graph illustrating setting of a frequency control region for control of transmission power, and FIG. 8B is a graph illustrating variation of a charging section according to a control frequency and a transmission distance.

As illustrated in FIG. 8, in an example of the magnetic resonance wireless power transmission and reception method using charging section control according to the embodiment of the present invention, a control means for transmission power is limited to frequency control, and a description will be given.

First, a frequency control region is set as illustrated in FIG. 8A. This means that the transmitter 100 is designed and manufactured to have power transmission characteristics according to frequency setting as in FIG. 8A. In other words, FIG. 8A means that the transmitter 100 is manufactured or set so that transmission power increases when a frequency approaching a resonance frequency is set, and transmission power decreases when the frequency is increased.

Referring to the resonance frequency, a frequency at which power may be favorably transmitted over a farthest distance when designing transmission distance specifications is preferably set as the resonance frequency. A reason therefor is that, among system operation control frequencies, a frequency at which the largest amount of power can be transmitted may serve as the resonance frequency.

The frequency control region may be set to one of left or right regions based on the resonance frequency. That is, the frequency control region may be set so that control is performed in an increased range or a decreased range centered on the resonance frequency. All examples described below describe embodiments in which the right side of the resonance frequency is set as the frequency control region.

FIG. 8 illustrates charging section length characteristics according to frequency and transmission distance.

For example, when a control target charging section length is set to 320 mm and control is started with a transmission distance of 240 mm, a charging maintenance length may be measured to be greater than 320 m when control is started at an initial resonance frequency and maximum power is transmitted at this time.

Accordingly, a control operation is performed to gradually decrease the frequency so that the charging section length becomes 320 mm, and as illustrated in FIG. 8, the frequency is maintained and controlled around 196.4 to 196.5 kHz. In this instance, situation ① occurs.

When the length of the transmitter 100 and the receiver 200 decreases by 20 mm and the transmission distance becomes 220 mm since the vehicle load increases or due to other reasons from situation ①, the charging section length increases from 320 mm to 335 mm, resulting in situation ②.

In this case, in order to return the charging section length to 320 mm, transmission power needs to be decreased.

To this end, a control operation is performed to increase the frequency, and the frequency is increased to 196.9 kHz, which leads to situation ③.

In the opposite situation, when the charging maintenance length is reduced for any reason, a control operation is performed to decrease the frequency, thereby increasing transmission power. In this way, a control operation is performed to maintain the charging maintenance length at a target value.

When a control operation is performed in this way, sufficient power may be stably supplied to the receiver 200 regardless of the vehicle speed.

In addition, as a transmission power control means of the magnetic resonance wireless power transmission and reception method using charging section control according to the embodiment of the present invention, it is possible to use "DC input" in addition to frequency control.

As illustrated in FIG. 1, when a circuit capable of increasing or decreasing an input voltage is added at a position of "DC input" in a circuit of the transmitter 100, transmission power increases if a voltage of "DC input" is increased, and transmission power decreases if a voltage of "DC input" is decreased. Therefore, this may be used as the transmission power control means.

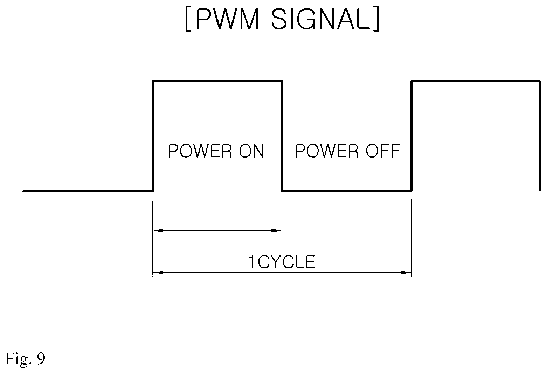

FIG. 9 illustrates a resonance frequency PWM signal that describes a duty ratio as a means of controlling transmission power of the magnetic resonance wireless power transmission and reception method using charging section control according to the embodiment of the present invention.

As illustrated in FIG. 9, a "duty ratio" may be used as another means for transmission power control of the magnetic resonance wireless power transmission and reception method using charging section control according to the embodiment of the present invention. The resonance frequency is implemented as a square wave PWM signal illustrated in FIG. 9. Here, the "duty ratio" is defined by [Mathematical Formula 4] below, and PWM control means a method of controlling an average voltage by changing the duty ratio within a certain cycle.

$$[\text{Mathematical Formula 4}]$$
$$\text{Duty ratio} = = \frac{Power\ ON\ time}{1\ cycle}$$

The "duty ratio" may be used as a transmission power control means of the magnetic resonance wireless power transmission and reception method using charging section control according to the embodiment of the present invention by using a characteristic in which an increase in duty ratio increases a power ON time to increase transmission power, and a decrease in duty ratio decreases a power ON time to decrease transmission power as shown in [Mathematical Formula 4].

Even though this specification has been described with reference to preferred embodiments of the present invention, those skilled in the art will be able to modify and change the present invention in various ways without departing from the spirit and scope of the present invention as set forth in the claims below. Therefore, when modified implementation basically includes elements of the claims of the present invention, it should be considered that all modified implementation is within the technical scope of the present invention.

**Claims**

1. A magnetic resonance wireless power transmission and reception system comprising a transmitter Tx installed on one side of a device and a receiver Rx installed on the other side and intermittently charged by an operation of the device, wherein a valid charging time during which a voltage value measured by the receiver is greater than or equal to a preset voltage value is measured, and transmission power is controlled so that the valid charging time is within a preset target charging time range.

2. A magnetic resonance wireless power transmission and reception system comprising a transmitter Tx installed on one side of a device and a receiver Rx installed on the other side and intermittently charged by an operation of the device, wherein a valid charging time during which a voltage value measured by the receiver is greater than or equal to a preset voltage value is measured, and transmission power is controlled so that a charging section length calculated based on the measured valid charging time is within a preset target charging section length range.

3. The wireless power transmission and reception system according to claim 1 or 2, wherein:

   the transmitter is installed on an upper body side of a vehicle wheel, and
   the receiver is installed inside a tire of the vehicle wheel.

4. The wireless power transmission and reception system according to claim 1, wherein:

the transmitter comprises an AC/DC conversion circuit, a DC/RF conversion circuit, a matching circuit, a control circuit, and a communication circuit, and
the receiver comprises a matching circuit, a rectifier circuit, a stabilization circuit, a DC/DC conversion circuit, a battery circuit, a control circuit, a communication circuit, and a valid charging time measurement unit.

5. The wireless power transmission and reception system according to claim 1 or 2, wherein the transmission power is controlled by changing a system frequency within an increased range or a decreased range centered on a resonance frequency for transmission of maximum power.

6. The wireless power transmission and reception system according to claim 1 or 2, wherein the transmission power is controlled using a DC input voltage of the transmitter.

7. The wireless power transmission and reception system according to claim 5, wherein the transmission power is controlled by changing a duty ratio of a PWM (Pulse Width Modulation) signal of the resonance frequency.

8. The wireless power transmission and reception system according to claim 3, wherein the valid charging time measurement unit measures a time when a voltage value is greater than or equal to at least one of an output voltage value Vr of the stabilization circuit, an output voltage value Vo of the DC/DC conversion circuit, or an output voltage value Vb of the battery circuit.

9. A magnetic resonance wireless power transmission and reception method using charging section control, the method using a magnetic resonance wireless power transmission and reception system comprising a transmitter Tx installed on one side of a device and a receiver Rx installed on the other side and intermittently charged by an operation of the device, the method comprising:

a step (a) of measuring, by the receiver, a voltage value of the receiver for wireless power transmitted by the transmitter;
a step (b) of measuring, by the receiver, a valid charging time, which is a time when the measured voltage value of the receiver is greater than or equal to a valid charging voltage value; and
a step (c) of controlling, by the transmitter, transmission power so that the measured charging time received from the receiver is within a preset target charging time range.

10. A magnetic resonance wireless power transmission and reception method using charging section control, the method using a magnetic resonance wireless power transmission and reception system comprising a transmitter Tx installed on one side of a device and a receiver Rx installed on the other side and intermittently charged by an operation of the device, the method comprising:

a step (a) of measuring, by the receiver, a voltage value of the receiver for wireless power transmitted by the transmitter;
a step (b) of calculating a charging section length corresponding to a rotation length of the tire during a charging section according to the measured voltage value of the receiver; and
a step (c) of controlling, by the transmitter, transmission power so that the measured charging section length received from the receiver is within a preset target charging section length range.

11. The magnetic resonance wireless power transmission and reception method according to claim 9 or 10, wherein the voltage value of the receiver is at least one of an output voltage value Vo of the receiver, a stabilization voltage value Vr of the receiver, or a voltage value Vb of a battery being charged.

12. The magnetic resonance wireless power transmission and reception method according to claim 10, wherein the step (b) comprises:

a step (b1) of measuring, by the receiver, a valid charging time, which is a time when the measured voltage value of the receiver is greater than or equal to a valid charging voltage value; and
a step (b2) of calculating, by the receiver, a charging section length using the measured valid charging time and a vehicle speed during the valid charging time.

**13.** The magnetic resonance wireless power transmission and reception method according to claim 9 or 10, wherein the step (c) comprises controlling the transmission power by changing a system frequency within an increased range or a decreased range centered on a resonance frequency for transmission of maximum power.

**14.** The magnetic resonance wireless power transmission and reception method according to claim 9 or 10, wherein the step (c) comprises controlling the transmission power using a DC input voltage of the transmitter.

**15.** The magnetic resonance wireless power transmission and reception method according to claim 13, wherein the step (c) comprises controlling the transmission power by changing a duty ratio of a PWM signal of a resonance frequency.

Fig. 1a

Fig. 1b

Fig. 2

START

MEASURE VOLTAGE VALUE OF RECEIVER AFTER SETTING FREQUENCY WITHIN PRESET FREQUENCY CONTROL RANGE AND TRANSMITTING WIRELESS POWER — S110

MEASURE CHARGING TIME, WHICH IS TIME WHEN MEASURED VOLTAGE VALUE IS GREATER THAN OR EQUAL TO VALID CHARGING VOLTAGE VALUE — S120

CONTROL TRANSMISSION POWER SO THAT MEASURED CHARGING TIME IS WITHIN PRESET TARGET CHARGING TIME RANGE — S130

END

Fig. 3

START

MEASURE VOLTAGE VALUE OF RECEIVER AFTER SETTING FREQUENCY WITHIN PRESET FREQUENCY CONTROL RANGE AND TRANSMITTING WIRELESS POWER — S210

MEASURE CHARGING TIME, WHICH IS TIME WHEN MEASURED VOLTAGE VALUE IS GREATER THAN OR EQUAL TO VALID CHARGING VOLTAGE VALUE — S220

CALCULATE CHARGING SECTION LENGTH USING MEASURED CHARGING TIME AND VEHICLE SPEED — S230

CONTROL TRANSMISSION POWER SO THAT CHARGING SECTION LENGTH IS WITHIN PRESET TARGET CHARGING SECTION LENGTH RANGE — S240

END

Fig. 4

Fig. 5

Fig. 6a

Fig. 6b

Fig. 7a

Fig. 7b

Fig. 8a

Fig. 8b

[PWM SIGNAL]

POWER ON    POWER OFF

1CYCLE

Fig. 9

<div align="center">**INTERNATIONAL SEARCH REPORT**</div>

| | International application No. |
|---|---|
| | **PCT/KR2023/007609** |

**A.    CLASSIFICATION OF SUBJECT MATTER**

**H02J 50/12**(2016.01)i; **B60C 23/04**(2006.01)i

According to International Patent Classification (IPC) or to both national classification and IPC

**B.    FIELDS SEARCHED**

Minimum documentation searched (classification system followed by classification symbols)

H02J 50/12(2016.01); G01R 31/382(2019.01); H02H 9/04(2006.01); H02J 50/10(2016.01); H02J 50/20(2016.01); H02J 50/80(2016.01); H02J 50/90(2016.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선 전력(wireless power), 자기공진(magnetic resonance), 전압(voltage), 시간(time), 목표(target)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2022-0072611 A (SAMSUNG ELECTRONICS CO., LTD.) 02 June 2022 (2022-06-02)<br>See paragraphs [0047]-[0150], claims 1-20, and figures 3-10. | 1-15 |
| Y | KR 10-2351949 B1 (BANF CO., LTD.) 18 January 2022 (2022-01-18)<br>See paragraphs [0113]-[0126], claim 1, and figures 10-11. | 1-15 |
| Y | KR 10-2020-0083920 A (INTEGRATED DEVICE TECHNOLOGY, INC.) 09 July 2020 (2020-07-09)<br>See paragraphs [0033]-[0035], claims 1-20, and figure 5. | 2,8,10,12 |
| A | US 2021-0384722 A1 (RENESAS ELECTRONICS AMERICA INC.) 09 December 2021 (2021-12-09)<br>See paragraphs [0047]-[0053], and figure 8. | 1-15 |
| A | KR 10-2017-0020143 A (LG INNOTEK CO., LTD.) 22 February 2017 (2017-02-22)<br>See paragraphs [0242]-[0261], and figures 9-11. | 1-15 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 September 2023** | **20 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 518 099 A1

| INTERNATIONAL SEARCH REPORT<br>Information on patent family members | | International application No.<br>**PCT/KR2023/007609** |

| Patent document<br>cited in search report | | | Publication date<br>(day/month/year) | Patent family member(s) | | | Publication date<br>(day/month/year) |
|---|---|---|---|---|---|---|---|
| KR | 10-2022-0072611 | A | 02 June 2022 | WO | 2022-114615 | A1 | 02 June 2022 |
| KR | 10-2351949 | B1 | 18 January 2022 | WO | 2023-027324 | A1 | 02 March 2023 |
| KR | 10-2020-0083920 | A | 09 July 2020 | CN | 111384789 | A | 07 July 2020 |
| | | | | US | 10938255 | B2 | 02 March 2021 |
| | | | | US | 2020-0212729 | A1 | 02 July 2020 |
| US | 2021-0384722 | A1 | 09 December 2021 | CN | 113783312 | A | 10 December 2021 |
| | | | | KR | 10-2021-0151697 | A | 14 December 2021 |
| KR | 10-2017-0020143 | A | 22 February 2017 | US | 2018-0241223 | A1 | 23 August 2018 |
| | | | | WO | 2017-026721 | A1 | 16 February 2017 |

Form PCT/ISA/210 (patent family annex) (July 2022)